(19) Europäisches Patentamt
European Patent Office
Office européen des brevets

(11) EP 3 613 800 B1

(12) **EUROPEAN PATENT SPECIFICATION**

(45) Date of publication and mention of the grant of the patent:
**08.06.2022 Bulletin 2022/23**

(21) Application number: **18788464.8**

(22) Date of filing: **19.04.2018**

(51) International Patent Classification (IPC):
***C08J 5/22*** *(2006.01)* ***C08G 75/24*** *(2006.01)*
***B01D 61/42*** *(2006.01)* ***B01D 61/02*** *(2006.01)*

(52) Cooperative Patent Classification (CPC):
**C08J 5/2293; B01D 67/0093; B01D 71/80; B01D 71/82;** B01D 71/32; B01D 71/36; B01D 2325/42; C08J 2327/18

(86) International application number:
**PCT/KR2018/004557**

(87) International publication number:
**WO 2018/194393 (25.10.2018 Gazette 2018/43)**

(54) **METHOD FOR MANUFACTURING ION EXCHANGE MEMBRANE USING CHEMICAL MODIFICATION AND ION EXCHANGE MEMBRANE MANUFACTURED THEREBY**

VERFAHREN ZUR HERSTELLUNG EINER IONENAUSTAUSCHMEMBRAN UNTER VERWENDUNG EINER CHEMISCHEN MODIFIKATION UND DADURCH HERGESTELLTEN IONENAUSTAUSCHMEMBRAN

PROCÉDÉ DE FABRICATION D'UNE MEMBRANE ÉCHANGEUSE D'IONS UTILISANT LA MODIFICATION CHIMIQUE ET MEMBRANE ÉCHANGEUSE D'IONS AINSI FABRIQUÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2017 KR 20170051625**
**11.04.2018 KR 20180042301**

(43) Date of publication of application:
**26.02.2020 Bulletin 2020/09**

(73) Proprietor: **Dankook University Cheonan Campus Industry Academic Cooperation**
**Cheonan-si, Chungcheongnam-do 31116 (KR)**

(72) Inventors:
- **LEE, Chang Hyun**
  **Seongnam-si**
  **Gyeonggi-do 13589 (KR)**
- **OH, Chang Hoon**
  **Cheonan-si**
  **Chungcheongnam-do 31105 (KR)**
- **HWANG, Jin Pyo**
  **Cheonan-si**
  **Chungcheongnam-do 31116 (KR)**

(74) Representative: **Macquet, Christophe**
**Macquet & Associés**
**Arche des Dolines**
**7, rue Soutrane**
**06560 Sophia Antipolis (FR)**

(56) References cited:
**JP-A- 2004 051 685** **US-A- 4 126 589**
**US-A- 4 357 218** **US-A- 4 423 157**

- **HENSLEY ET AL: "The relationship between proton conductivity and water permeability in composite carboxylate/sulfonate perfluorinated ionomer membranes", JOURNAL OF POWER SOURCES, ELSEVIER SA, CH, vol. 172, no. 1, 20 September 2007 (2007-09-20), pages 57-66, XP022260045, ISSN: 0378-7753, DOI: 10.1016/J.JPOWSOUR.2006.12.014**
- **CHAMOULAUD, GWENAEL: "Chemical modification of the surface of a sulfonated membrane by formation of a sulfonamide bond", Langmuir, vol. 20, no. 12, 2004, pages 4989-4995, XP055023853,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- CHOI, S-H.: "Electrochemical properties of polyethylene membrane modified with carboxylic acid group", Radiation Physics and Chemistry, vol. 57, no. 2, 2000, pages 179-186, XP055613412,
- KHODABAKHSHI, A.R.: "Preparation, optimization and characterization of novel ion exchange membranes by blending of chemically modified PVDF and SPPO", Separation and Purification Technology, vol. 90, 2012, pages 10-21, XP028415869,
- SWAMINATHAN, P.: "Surface modification of ion exchange membrane using amines", Journal of Membrane Science, vol. 234, no. 1-2, 2004, pages 131-137, XP004500761,

## Description

[Technical Field]

The present invention relates to a method of preparing an ion-exchange membrane using chemical modification and an ion-exchange membrane prepared thereby, and more particularly, to a method of preparing an ion-exchange membrane by substituting sulfonic acid groups ($-SO_3^-H^+$) of a perfluorinated sulfonic acid electrolyte membrane with carboxyl groups ($-COO^-H^+$) and the ion exchange membrane prepared thereby.

[Background Art]

An ion-exchange membrane refers to a polymer membrane that selectively permeates anions and cations and is classified into a cation exchange membrane and an anion exchange membrane according to its charge characteristics, respectively. A cation exchange membrane has negatively charged functional groups, permeates only cations by electrical attraction, and blocks the movement of anions by electrostatic repulsion. In addition, an anion exchange membrane has positively charged functional groups, transports anions by electrical attraction, and blocks the movement of cations by electrostatic repulsion.

Such ion-exchange membranes are applied as polymer electrolyte membranes and electrode binder materials for saline water electrolysis, polymer electrolyte membrane fuel cell (PEMFC), solid alkaline fuel cell(SAFC), vanadium redox flow battery (VRFB), reverse electrodialysis (RED), polymer electrolyte membrane water electrolysis, alkaline polymer electrolyte membrane water electrolysis, electrodialysis (ED), and so on.

Among ion-exchange membranes, perfluorinated ion-exchange membranes with excellent thermal and chemical resistance have been used as representative cation exchange membranes for saline water electrolysis to prepare both chlorine gas and alkaline chemicals, polymer electrolyte membranes for ozone generators, fuel cells, water electrolysis and hydrochloric acid electrolysis.

These ion-exchange membranes should have high current efficiency and low electrochemical cell voltage in terms of productivity and economics perspective. To meet these requirements, double-layered ion-exchange membranes, which include a carboxylic acid layer having carboxyl groups with high anion exclusion capability and a sulfonic layer having sulfonic acid groups with low resistance to cations were developed.

For example, in Japanese Laid-Open Patent Publication No. 2001-323084, an ion-exchange membrane consisting of at least two layers including a fluorinated polymer layer having sulfonic acid groups and a fluorinated polymer layer having carboxyl groups is disclosed. In addition, in Korean Unexamined Patent Application No. 2017-0113232, a method of introducing various ion exchangers to a base membrane, which includes expanding a polymer electrolyte base membrane and performing a polymerization reaction of a monomer is disclosed.

However, in the method of preparing an ion-exchange membrane disclosed herein, since a different type of ion exchanger layer is formed using thermal compression or coating, the problem of interfacial delamination has not been solved, and this method also needs the improvement in performance, for example, the improvement in membrane strength or current efficiency.

[Disclosure]

[Technical Problem]

The present invention is directed to providing a method of preparing an ion-exchange membrane by substituting sulfonic acid groups ($-SO_3^-H^+$) with carboxyl groups ($-COO^-H^+$) through the chemical modification of a polymer electrolyte membrane, thereby controlling a cation transport property and solving interfacial resistance between different types of layers in the preparation of multi-layered membrane and interfacial delamination according to the application of an electrochemical system.

The present invention is also directed to providing an ion-exchange membrane in which sulfonic acid groups is modified with carboxyl groups or some sulfonic acid groups are modified with carboxyl groups through chemical modification, thereby forming double-layered structure, and thus the ion-exchange membrane has excellent durability, high current efficiency, and no interfacial delamination.

[Technical Solution]

To solve the above-described problems, the present invention provides a method of preparing a cation-exchange membrane, which is characterized by selectively substituting sulfonic acid groups ($-SO_3^-H^+$) in a perfluorinated sulfonic acid electrolyte membrane with carboxyl groups ($-COO^-H^+$), the method comprising: a) chlorinating sulfonic acid groups

in a perfluorinated sulfonic acid electrolyte membrane; b) nitrilating the chlorinated electrolyte membrane; and c) hydrolyzing the nitrilated electrolyte membrane, and an ion-exchange membrane prepared thereby.

[Advantageous Effects]

In the present invention, double-layered ion-exchange membranes including both sulfonic acid groups layer and carboxyl groups layer may be prepared by controlling the extent of chlorination of perfluorinated sulfuric acid ionomer-based ion-exchange membrane or restoring some sulfonic acid groups of chlorinated and nitrilated membranes. The double-layered ion-exchange membranes having different functional groups suitable for an applied characteristic can be prepared. In addition, a chemical modification method according to the present invention has the advantage of fundamentally preventing the interfacial resistance between different types of layers and interlayer delamination occurring in a multi-layered separator prepared by a physical heat-sealing method.

[Description of Drawings]

FIG. 1 is a set of scanning electron microscope (SEM) images of a modified ion-exchange membrane according to an example of the present invention showing whether the membrane surface is damaged over chlorination time.
FIG. 2 shows the results of energy dispersive X-ray (EDX) analysis by steps of a reaction according to an example of the present invention.
FIG. 3 is a graph showing principal attenuated total reflection (ATR) spectra by steps of a reaction of an example and a comparative example of the present invention.
FIG. 4 is a Fourier transform infrared (FT-IR) graph that can confirm the extent of chlorination of an ion-exchange membrane according to examples of the present invention.
FIG. 5 shows the sodium ($Na^+$) ion conductivity of ion-exchange membranes prepared according to examples and comparative examples of the present invention.
FIG. 6 is a graph showing electrochemical durability induced by the application of constant current to ion-exchange membranes prepared according to an example and comparative examples of the present invention.
FIG. 7 is a table showing the performance and energy consumption of ion-exchange membranes prepared according to examples and comparative examples of the present invention.
FIG. 8 shows the $OH^-$ ion permeability of ion-exchange membranes prepared according to examples and comparative examples of the present invention.

[Modes of the Invention]

The present invention will be described in further detail with reference to examples and drawings.
A method of preparing an ion-exchange membrane according to the present invention is characterized by selectively substituting sulfonic acid groups ($-SO_3^-H^+$) in a perfluorinated sulfonic acid electrolyte membrane with carboxyl groups ($-COO^-H^+$), the method comprising: a) chlorinating sulfonic acid groups in a perfluorinated sulfonic acid electrolyte membrane; b) nitrilating the chlorinated electrolyte membrane; and c) hydrolyzing the nitrilated electrolyte membrane.
In the present invention, while an ion-exchange membrane in which all sulfonic acid groups of a perfluorinated polymer electrolyte membrane are modified with carboxyl groups may be prepared, double-layered ion-exchange membranes including both sulfonic acid groups layer and carboxyl groups layer may be prepared by controlling chlorination to chlorinate some sulfonic acid groups or restoring some sulfonic acid groups before nitrilation.
The modification of an ion-exchange membrane according to the present invention is described step by step with reference to Reaction Scheme 1.

[Reaction Scheme 1]

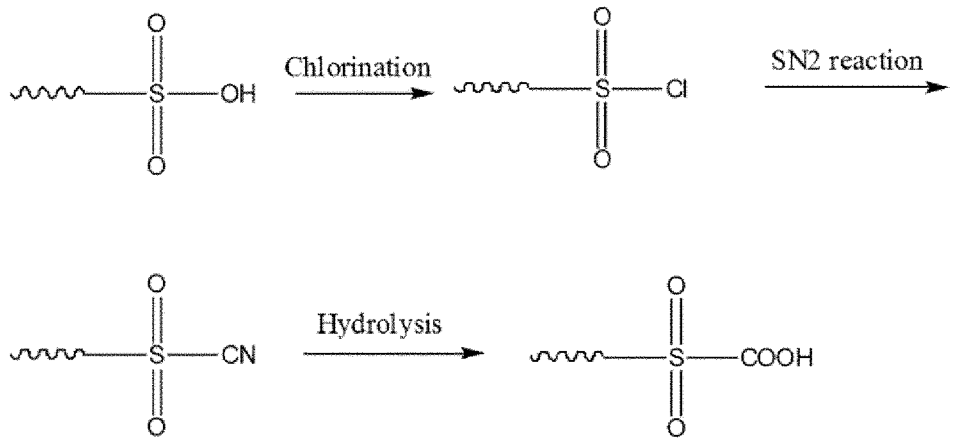


In the present invention, as seen from Reaction Scheme 1, modification is performed in three steps, which are, specifically, chemical modification of an ion-exchange membrane accomplished by sequentially performing chlorination (-OH → -Cl; first step), nitrilation via SN2 reaction (-Cl → -CN; second step) and nitrile hydrolysis (-CN → -COOH; third step).

As a perfluorinated sulfonic acid electrolyte membrane that can be used in the present invention, a perfluorinated sulfuric acid ionomer free-standing membrane or a reinforced composite membrane having porous supports may be used.

The perfluorinated sulfuric acid ionomer may be, for example, one or more selected from the group consisting of poly(perfluorosulfonic acid)s, sulfonic acid-containing-copolymers composed of tetrafluoroethylene and fluorovinylether, and their mixtures thereof, but the present invention is not limited thereto.

In addition, when a reinforced composite membrane is used as the perfluorinated sulfonic acid electrolyte membrane, a porous support included in the reinforced composite membrane may be, for example, a polymer such as polytetrafluoroethylene, poly(vinyl difluoroethylene), polyethylene, polypropylene, poly(ethylene terephthalate), polyimide and polyamide, but the present invention is not particularly limited thereto.

Specifically, the chemical modification according to the present invention will be described step by step as follows. First, in step a), the chlorination of the perfluorinated sulfonic acid electrolyte membrane may be performed by treating a perfluorinated polymer electrolyte membrane having sulfonic acid groups with a solution containing one or more compounds selected from the group consisting of $SOCl_2$, $MeSO_2Cl$, $PCl_5$, $POCl_3$, and dichloromethane (DCM), but the present invention is not limited thereto. Any solution that can chlorinate sulfonic acid groups can be used without limitation. Generally, the concentration of the aqueous solution is preferably in a range of 0.5 to 20 M.

In addition, the chlorination according to the present invention is preferably performed at 10 to 110 °C. The reaction time may be selectively adjusted according to how much chemical modification of sulfonic acid groups is required, but generally, a range of approximately 30 seconds to 24 hours is suitable. After chlorination, washing and drying are performed, followed by the following reaction.

Another aspect of the present invention is for preparing an ion-exchange membrane having double-layered structure of sulfonic acid groups layer and carboxyl groups layer by controlling chlorination to substitute some sulfonic acid groups with carboxyl groups through chemical modification or by restoring some sulfonic acid groups before nitrilation as needed.

As such, the present invention may further include restoring sulfonic acid groups before nitrilation. The restoration of sulfonic acid groups may be performed by treating the chlorinated electrolyte membrane with an alkaline aqueous solution containing one or more compounds selected from the group consisting of sodium hydroxide (NaOH), potassium hydroxide (KOH), lithium hydroxide (LiOH), beryllium hydroxide ($Be(OH)_2$) and calcium hydroxide ($Ca(OH)_2$), but the present invention is not limited thereto, and any solution that can be restored into sulfonic acid groups may be used without limitation. Generally, the concentration of the alkaline aqueous solution is preferably in a range of 0.01 to 10 M. In addition, the restoration of sulfonic acid groups is preferably performed at 10 to 100 °C for 30 seconds to 24 hours. After the restoration of sulfonic acid groups, washing and drying are performed, followed by the following reaction.

The nitrilation in step b) of the present invention may be performed by treating the chlorinated perfluorinated polymer electrolyte membrane with a solution containing one or more compounds selected from the group consisting of potassium cyanide (KCN), acetonitrile ($CH_3CN$), potassium cyanate (KOCN), potassium thiocyanide (KSCN), sodium cyanate (NaOCN), silver cyanide (AgCN) and copper cyanide (CuCN), but the present invention is not limited thereto. Any solution that can nitrilate a chlorine group can be used without limitation. Generally, the concentration of the aqueous

solution is preferably in a range of 0.01 to 10 M, and methylsulfonxide (DMSO) or de-ionized water may be used as a solvent.

In addition, the nitrilation is preferably performed at 10 to 120 °C, and the reaction time is suitably 30 seconds to 24 hours. When the nitrilation is performed, washing and drying may be further included.

In addition, in step c), the hydrolysis may be performed by treating the nitrilated electrolyte membrane with an aqueous solution containing one or more compounds selected from the group consisting of sodium hydroxide (NaOH), potassium hydroxide (KOH), lithium hydroxide (LiOH), beryllium hydroxide ($Be(OH)_2$) and calcium hydroxide ($Ca(OH)_2$) or deionized water, but the present invention is not specifically limited thereto. Generally, the concentration of the aqueous solution is preferably in a range of 0.01 to 10 M, or deionized water is preferably used.

In addition, the hydrolysis is preferably performed in a range of 10 °C to the boiling point of the above-described aqueous solution (usually approximately 120 °C), and the reaction time is suitably in a range of approximately 30 seconds to 24 hours. In addition, after the hydrolysis, washing and drying may be further included.

Meanwhile, in the chemical modification method according to the present invention, the reaction temperature and time range of each step may be suitably adjusted as needed, and although not specifically limited, when each reaction is performed less than the above-mentioned temperature and time ranges, sufficient chemical modification is not accomplished, and thus carboxyl groups layer prepared thereby becomes so thin that durability may be degraded, and when the reaction is performed exceeding the above-described ranges, the membrane may be damaged, and process efficiency may be reduced due to long-term reactions, resulting in cost problems. For this reason, the reactions are preferably performed in each condition range.

Hereinafter, the present invention will be described in further detail with reference to specific examples. However, the following examples are provided to help in understanding the present invention, but it should not be interpreted that the scope of the present invention is limited thereto.

<Example 1>

Chlorination (the first step) was performed by reacting Nafion212, which is a perfluorinated polymer electrolyte membrane having sulfonic acid groups, in 5 M $SOCl_2$/dichloromethane solution under a nitrogen atmosphere at 40 °C while stirring at 400 rpm for 4 hours. After the reaction, the resulting product was washed with dichloromethane for approximately 5 minutes and dried at 80 °C for 4 hours.

Nitrilation (the second step) was performed by preparing 0.01 M KCN/DMSO:deionized water=50:50 vol% solution under a nitrogen atmosphere at 90 °C and stirring the ion-exchange membrane obtained in the first step at 600 rpm for 12 hours. After the reaction, the resulting product was washed with the used solvent for 30 minutes and dried at 80 °C for one day.

Finally, hydrolysis (the third step) was performed by reacting the nitrilated product with 0.01 M HCl at room temperature for 2 hours and washing the resulting product in boiling water for 2 hours.

<Example 2>

A process was carried out in the same manner as described in Example 1, except that Nafion212 was stirred at a speed of 800 rpm for 2 hours at room temperature under air atmosphere in chlorination (the first step).

<Example 3>

A process was carried out in the same manner as described in Example 1, except that Nafion212 was stirred in 1 M $SOCl_2$/dichloromethane solution at a speed of 800 rpm for 30 seconds in chlorination (the first step).

<Example 4>

A process was carried out in the same manner as described in Example 1, except that Nafion212 was stirred in 0.5 M $SOCl_2$/dichloromethane solution at a speed of 600 rpm for 12 hours at 80 °C in chlorination (the first step).

<Example 5>

A process was carried out in the same manner as described in Example 1, except that Nafion212 was stirred at a speed of 200 rpm and 80 °C in chlorination (the first step).

<Example 6>

A reaction was carried out in the same manner as described in Example 1, except that Nafion212 was stirred in 1 M $MeSO_2Cl$/dichloromethane solution at a speed of 800 rpm for 2 hours at room temperature under air atmosphere in chlorination (the first step).

<Example 7>

A process was carried out in the same manner as described in Example 1, except that Nafion212 was stirred in 0.5 M $MeSO_2Cl$/dichloromethane solution at a speed of 800 rpm at room temperature under air atmosphere in chlorination (the first step).

<Example 8>

A process was carried out in the same manner as described in Example 1, except that Nafion212 was reacted in 5 M $MeSO_2Cl$/dichloromethane solution for 24 hours at 10 °C under air atmosphere in chlorination (the first step).

<Example 9>

A process was carried out in the same manner as described in Example 1, except that Nafion212 was stirred in 1 M $PCl_5/POCl_3$ solution at a speed of 600 rpm at 80 °C in chlorination (the first step).

<Example 10>

A process was carried out in the same manner as described in Example 1, except that Nafion212 was reacted in 0.5 M $PCl_5/POCl_3$ solution for 12 hours at 80 °C in chlorination (the first step).

<Example 11>

A process was carried out in the same manner as described in Example 1, except that Nafion212 was stirred in 20 M $PCl_5/POCl_3$ solution at a speed of 200 rpm for 2 hours at 110 °C in chlorination (the first step).

<Example 12>

A process was carried out in the same manner as described in Example 1, except that Nafion212 was stirred in 5 M $PCl_5/POCl_3$ solution at a speed of 200 rpm for 8 hours at 110 °C in chlorination (the first step).

<Example 13>

A process was carried out in the same manner as described in Example 1, except that 5 M KCN solution was prepared under air atmosphere and stirred in the ion-exchange membrane obtained in the first step at a speed of 200 rpm for 2 hours in nitrilation (the second step).

<Example 14>

A process was carried out in the same manner as described in Example 1, except that the ion-exchange membrane obtained in the first step was stirred at a speed of 1000 rpm for 15 hours at room temperature in nitrilation (the second step).

<Example 15>

A process was carried out in the same manner as described in Example 1, except that 5 M KCN solution was prepared under air atmosphere at 120 °C and reacted with the membrane obtained in the first step for 30 seconds in nitrilation (the second step).

<Example 16>

A process was carried out in the same manner as described in Example 1, except that the membrane obtained

in the first step was reacted with DMSO:deionized water=25:75 vol% solvent at a speed of 1000 rpm for 15 hours at room temperature in nitrilation (the second step).

<Example 17>

A process was carried out in the same manner as described in Example 1, except that 0.1 M KCN/DMSO:deionized water=25:75 vol% solution was prepared under air atmosphere and reacted with the membrane obtained in the first step for 2 hours in nitrilation (the second step).

<Example 18>

A reaction was carried out in the same manner as described in Example 1, except that 0.01 M acetonitrile/DMSO:deionized water=50:50 vol% solution was prepared at 10 °C to be stirred with the membrane obtained in the first step at a speed of 1000 rpm for 24 hours in nitrilation (the second step).

<Example 19>

A process was carried out in the same manner as described in Example 1, except that 5 M acetonitrile aqueous solution was prepared under air atmosphere and stirred with the membrane obtained in the first step at a speed of 400 rpm for 2 hours in nitrilation (the second step).

<Example 20>

A process was carried out in the same manner as described in Example 1, except that 0.01 M potassium cyanate (KOCN)/DMSO:deionized water=50:50 vol% solution was prepared at room temperature and stirred with the membrane obtained in the first step at a speed of 1000 rpm for 15 hours in nitrilation (the second step).

<Example 21>

A process was carried out in the same manner as described in Example 1, except that 10 M potassium cyanate aqueous solution was prepared under air atmosphere to be stirred with the membrane obtained in the first step at a speed of 400 rpm for 2 hours in nitrilation (the second step).

<Example 22>

A process was carried out in the same manner as described in Example 1, except that 0.01 M potassium thiocyanide (KSCN)/DMSO:deionized water=50:50 vol% solution was prepared at room temperature to be stirred with the membrane obtained in the first step at a speed of 1000 rpm for 15 hours in nitrilation (the second step).

<Example 23>

A process was carried out in the same manner as described in Example 1, except that 5 M potassium thiocyanide aqueous solution was prepared under air atmosphere to be stirred with the membrane obtained in the first step at a speed of 400 rpm for 2 hours in nitrilation (the second step).

<Example 24>

A process was carried out in the same manner as described in Example 1, except that 0.01 M sodium cyanate (NaOCN)/DMSO:deionized water=50:50 vol% solution was prepared at room temperature to be stirred with the membrane obtained in the first step at a speed of 1000 rpm for 15 hours in nitrilation (the second step).

<Example 25>

A process was carried out in the same manner as described in Example 1, except that 10 M sodium cyanate aqueous solution was prepared under air atmosphere to be stirred with the membrane obtained in the step 1 at a speed of 400 rpm for 2 hours in nitrilation (the second step).

<Example 26>

A process was carried out in the same manner as described in Example 1, except that 0.01 M silver cyanide (AgCN)/DMSO:deionized water=50:50 vol% solution was prepared at room temperature to be stirred with the membrane obtained in the first step at a speed of 1000 rpm for 15 hours, followed by washing for 6 hours 10 times in nitrilation (the second step).

<Example 27>

A process was carried out in the same manner as described in Example 1, except that 5 M silver cyanide aqueous solution was prepared under air atmosphere to be stirred with the membrane obtained in the first step at a speed of 400 rpm for 2 hours, followed by washing for 6 hours 10 times in nitrilation (the second step).

<Example 28>

A process was carried out in the same manner as described in Example 1, except that 0.01 M copper cyanide (CuCN)/DMSO:deionized water=50:50 vol% solution was prepared at room temperature to be stirred with the membrane obtained in the first step at a speed of 1000 rpm for 15 hours, followed by washing for 6 hours 10 times in nitrilation (the second step).

<Example 29>

A process was carried out in the same manner as described in Example 1, except that 5 M copper cyanide aqueous solution was prepared under air atmosphere to be stirred with the membrane obtained in the first step at a speed of 400 rpm for 2 hours, followed by washing for 6 hours 10 times in nitrilation (the second step).

<Example 30>

A process was carried out in the same manner as described in Example 1, except that the reaction product was reacted in a solution at the boiling point thereof for 1 hour in hydrolysis (the third step).

<Example 31>

A process was carried out in the same manner as described in Example 1, except that the reaction product was reacted in 1 M hydrochloric acid aqueous solution at the boiling point for 12 hours in hydrolysis (the third step).

<Example 32>

A process was carried out in the same manner as described in Example 1, except that the reaction product was reacted in a sulfuric acid ($H_2SO_4$) aqueous solution at the boiling point for 1 hour in hydrolysis (the third step).

<Example 33>

A process was carried out in the same manner as described in Example 1, except that the reaction product was reacted in 1 M sulfuric acid aqueous solution at the boiling point for 15 hours in hydrolysis (the third step).

<Example 34>

A process was carried out in the same manner as described in Example 1, except that the reaction product was reacted in a phosphoric acid ($H_2PO_4$) aqueous solution at the boiling point for 1 hour in hydrolysis (the third step).

<Example 35>

A process was carried out in the same manner as described in Example 1, except that the reaction product was reacted in 1 M phosphoric acid aqueous solution at the boiling point for 24 hours in hydrolysis (the third step).

<Example 36>

A process was carried out in the same manner as described in Example 1, except that the reaction product was reacted in a nitric acid ($HNO_3$) aqueous solution at the boiling point for 1 hour in hydrolysis (the third step).

<Example 37>

A process was carried out in the same manner as described in Example 1, except that the reaction product was reacted in a nitric acid aqueous solution at 60 °C for 1.5 hours in hydrolysis (the third step).

<Example 38>

A process was carried out in the same manner as described in Example 1, except that the reaction product was reacted in deionized water at the boiling point thereof for 1 hour in hydrolysis (the third step).

<Example 39>

A process was carried out in the same manner as described in Example 1, except that the reaction product was reacted in deionized water at 60 °C for 1.5 hours in hydrolysis (the third step).

<Example 40>

A process was carried out in the same manner as described in Example 1, except that the reaction product was reacted in a sodium hydroxide (NaOH) aqueous solution at room temperature for 2 hours in hydrolysis (the third step).

<Example 41>

A process was carried out in the same manner as described in Example 1, except that the reaction product was reacted in 1 M sodium hydroxide aqueous solution at the boiling point thereof for 0.5 hours in hydrolysis (the third step).

<Example 42>

A process was carried out in the same manner as described in Example 1, except that the reaction product was reacted in a potassium hydroxide (KOH) aqueous solution at room temperature for 2 hours in hydrolysis (the third step).

<Example 43>

A process was carried out in the same manner as described in Example 1, except that the reaction product was reacted in 1 M potassium hydroxide aqueous solution at the boiling point thereof for 0.5 hours in hydrolysis (the third step).

<Example 44>

A process was carried out in the same manner as described in Example 1, except that the reaction product was reacted in 10 M lithium hydroxide (LiOH) aqueous solution at 10 °C for six hours in hydrolysis (the third step).

<Example 45>

A process was carried out in the same manner as described in Example 1, except that the reaction product was reacted in 1 M lithium hydroxide aqueous solution at the boiling point thereof for 30 seconds in hydrolysis (the third step).

<Example 46>

A process was carried out in the same manner as described in Example 1, except that the reaction product was reacted in 5 M beryllium hydroxide ($Be(OH)_2$) aqueous solution at room temperature for 12 hours in hydrolysis (the third step).

<Example 47>

A process was carried out in the same manner as described in Example 1, except that the reaction product was reacted in 1 M beryllium hydroxide ($Be(OH)_2$) aqueous solution at the boiling point thereof for 0.5 hours in hydrolysis (the third step).

<Example 48>

A process was carried out in the same manner as described in Example 1, except that the reaction product was reacted in a calcium hydroxide ($Ca(OH)_2$) aqueous solution at room temperature for 24 hours in hydrolysis (the third step).

<Example 49>

A process was carried out in the same manner as described in Example 1, except that the reaction product was reacted in 1 M calcium hydroxide aqueous solution at 120 °C for 0.5 hours in hydrolysis (the third step).

<Example 50>

A process was carried out in the same manner as described in Example 1, except that one surface of the membrane obtained after a two-step reaction between the chlorination (the first step) and the nitrilation (the second step) of Example 1 was exposed to 0.01 M sodium hydroxide aqueous solution at room temperature, and then stirring at a speed of 100 rpm for 2 hours was added.

<Example 51>

A process was carried out in the same manner as described in Example 1, except that one surface of the membrane obtained after a two-step reaction between the chlorination (the first step) and the nitrilation (the second step) of Example 1 was exposed to 1 M potassium hydroxide aqueous solution at room temperature, and then stirring at a speed of 50 rpm for 6 hours was added.

<Example 52>

A process was carried out in the same manner as described in Example 50, except that a membrane on which a perfluorosulfonic acid (PFSA) dispersion (3M E-22122, EW:800; commercially available from 3M) was cast to a thickness of 50 μm was exposed to 0.01 M lithium hydroxide aqueous solution and stirring was performed for 12 hours.

<Example 53>

A process was carried out in the same manner as described in Example 51, except that a membrane on which a PFSA dispersion (3M E-22122, EW:800; commercially available from 3M) was cast to a thickness of 50 μm was exposed to 1 M beryllium hydroxide aqueous solution and stirring was performed at 10 °C for 24 hours.

<Example 54>

A process was carried out in the same manner as described in Example 50, except that a membrane on which a PFSA dispersion (Acquivion D79-25BS, EW:790; commercially available from Solvay) was cast to a thickness of 50 μm was exposed to a 10 M calcium hydroxide aqueous solution and stirring was performed at 100 °C for 30 seconds.

<Example 55>

A process was carried out in the same manner as described in Example 51, except that a membrane on which PFSA dispersion (Acquivion D79-25BS, EW:790; commercially available from Solvay) was cast to a thickness of 50 μm was exposed to 1 M potassium hydroxide aqueous solution and stirring was performed for 18 hours.

<Example 56>

A process was carried out in the same manner as described in Example 50, except that a Nafion™ XL membrane,

which is a reinforced composite membrane produced by DuPont, was exposed to 0.01 M lithium hydroxide aqueous solution and stirring was performed for 12 hours.

<Comparative Example 1>

An ion-exchange membrane Nafion212 commercially available from DuPont was used.

<Comparative Example 2>

A membrane in which a PFSA dispersion (3M E-22122, EW:800; commercially available from 3M) was cast to a thickness of 50 μm was used.

<Comparative Example 3>

A membrane in which a PFSA dispersion (Acquivion D79-25BS, EW:790; commercially available from Solvay) was cast to a thickness of 50 μm was used.

<Comparative Example 4>

An Aciplex™ F membrane, which is a commercialization membrane produced by Asahi-Kasei Corp., was used.

<Comparative Example 5>

A Nafion™ XL membrane, which is a reinforced composite membrane produced by DuPont, was used.

<Experimental Example 1> Scanning electron microscopy

In order to check and determine the damage to membranes due to chlorination, which is the first step reaction, in Examples 1, 6, 9, 52 and 54, surface analysis was performed using a scanning electron microscope, and SEM images of the respective membranes are shown in FIG. 1. As shown in FIG. 1, it can be confirmed that there were no damages to the membranes due to chlorination.

<Experimental Example 2> EDX analysis

EDX analysis was performed to observe the distribution of elements according to the reaction in each step of Example 1. As shown in FIG. 2, the distribution of Cl (chlorine) elements after chlorination (the first step) was confirmed, the distribution of N (nitrogen) elements according to the introduction of a CN group after nitrilation (the second step) was confirmed, and finally, the dissipation of Cl and N elements after hydrolysis (the third step) was confirmed, thereby confirming the change in surface functional group by reaction step.

<Experimental Example 3> Analysis of FT-IR spectra

In order to confirm substitution, that is, surface modification, of a functional group according to the reaction in each step of Example 1, ATR FT-IR was performed on the membrane obtained in each reaction, and the result is shown in FIG. 3.

In addition, FT-IR was performed for Example 50, in which one side of the chlorinated membrane is sulfonated again, and the result is shown in FIG. 4. ATR spectra of Example 50 showed the reduction in the -Cl peak of a KOH-exposed surface, and the degree of chlorination was adjusted according to a thickness by partially sulfonating the membrane obtained by chlorination (the first step) through an alkaline reaction. Meanwhile, the chlorinated membrane layer excluding the sulfonated membrane layer is modified with carboxyl groups layer through nitrilation (the second step) and hydrolysis (the third step). As such, the reaction carried out according to Example 50 has a significant meaning since it shows that carboxyl groups layer and sulfonic acid groups layer are present in double layers.

<Experimental Example 4> Measurement of ion conductivity

The $Na^+$ conductivity of the electrolyte membranes prepared using the membranes modified with carboxyl groups, which are described in Examples 50 to 56 and Comparative Example 4, was measured. The Na+ ion conductivity was calculated by the following Formula 1 after ohmic resistance or bulk resistance was measured using a four-point

probe AC impedance spectroscopic method.

[Formula 1]

$$\sigma = L/RS$$

[In Formula 1, $\sigma$: Na+ conductivity (S/cm), R: ohmic resistance ($\Omega$) of polymer electrolyte, L: distance (cm) between electrodes, S: area ($cm^2$) in electrolyte with constant current]

The conductivity for each example is shown in the table of FIG. 5.

Referring to FIG. 5, it can be seen that Examples 50 to 56 showing the partially modified double-layered membranes, which is carboxyl groups-sulfonic acid group double-layered membrane having a partial carboxyl group layer due to adjusting the degree of chlorination, exhibit more improved conductivity than Comparative Example 4 showing a representative commercialized carboxyl group-sulfonic acid group double-layered membrane.

<Experimental Example 5> Analysis of voltage-current characteristic

FIG. 6 is a graph showing the voltage-current characteristic of the ion-exchange membranes prepared according to the comparative examples and an example. The electrochemical durability was confirmed by creating an accelerating condition through circulation in a 30 wt% NaOH solution and a 25 wt% NaCl solution at 90 °C at a flow rate of 25 mL/min while supplying a constant current of 0.2 A/$cm^2$ for more than 11 hours.

It can be seen that, when driven under the electrochemical acceleration condition, Comparative Example 1 showing the single membrane having sulfonic acid groups exhibits a dramatic degradation in performance due to membrane damage (e.g., the formation of partial defects) after 11 hours, but Example 50 and Comparative Example 4 showing a partial carboxyl group maintain relatively stable voltages. According to the result, it can be seen that, despite very long-term operation, the ion-exchange membrane prepared according to Example 1 of the present invention exhibits excellent electrochemical durability compared to the commercialized ion-exchange membrane of Comparative Example 1, and therefore, it can be confirmed that chemical durability increased according to the formation of a carbonized membrane of the present invention.

<Experimental Example 6> Measurement of cell performance and energy consumption

Meanwhile, FIG. 7 shows a table of the comparison of performance and energy consumption for all of the examples and comparative examples.

Comparative Example 4, which is the representative carboxyl group-sulfonic acid group double-layered membrane, shows high performance due to low cell voltage and energy consumption at 0.6 A $cm^{-2}$, compared to Comparative Examples 1, 2, 3 and 5. In addition, referring to the table of FIG. 7, it can be seen that Examples 1 to 49, which are single membranes modified with carboxyl groups, , exhibit similar or slightly higher performance compared to Comparative Example 4, and Examples 50 to 56, which are double-layered membranes partially modified with carboxyl groups, exhibit improved performance compared to Comparative Example 4.

<Experimental Example 7> Ion permeability

The $OH^-$ ion permeability using a back-diffusion cell of the ion-exchange membranes prepared according to Examples 1 and 50 and Comparative Examples 1 and 4 was confirmed, and the result is shown in FIG. 8. The ion-exchange membranes used in the measurement were fixed in the center of cells filled with DI water titrated to pH of 2 and 30.7 wt.% NaOH solution, respectively, such that ion conductivity over time at 90 °C was measured. The measured values were compared with the titration table according to NaOH concentration and substituted into the following Expression 1 to confirm the diffusion behavior and permeation characteristic of $OH^-$ ions.

[Expression 1]

$$P(cm^2/sec) = V_B(cm3)xl(\mu m)/mol_A(mmol)XA(cm^2)\cdot(mmol_B/t(sec))f$$

As a result of the test, it can be confirmed that the ion-exchange membrane prepared according to Expression 1, which is carboxyl groups single layer, exhibited very high $OH^-$ ion barrier property, and the ion-exchange membrane according to Example 50 having carboxyl groups-sulfonic acid group double-layered structure also had relatively high

OH- ion barrier property due to the carboxyl group. In addition, Examples 1 and 50, compared to Comparative Example 4 having the same structure, that is, Aciplex, exhibited improved ion barrier property. Particularly, Table 3 can show that Example 1 is carboxyl groups single membrane and exhibits the highest barrier property to anion permeation. Therefore, in Examples 1 and 50, in terms of the ion barrier properties according to the thickness of carboxyl groups, it is expected that the carboxyl group layer prevents the diffusion of the same type of ions in electrolysis and contributes to improvement in electrochemical performance.

## Claims

1. A method of preparing a cation-exchange membrane, which is **characterized by** selectively substituting sulfonic acid groups in a perfluorinated sulfonic acid electrolyte membrane with carboxyl groups, the method comprising:

   a) chlorinating sulfonic acid groups in a perfluorinated sulfonic acid electrolyte membrane;
   b) nitrilating the chlorinated electrolyte membrane; and
   c) hydrolyzing the nitrilated electrolyte membrane.

2. The method of claim 1, wherein, in the step a), some of the sulfonic acid groups in the perfluorinated sulfonic acid electrolyte membrane are chlorinated.

3. The method of claim 1, further comprising an additional step to restore some of the sulfonic acid groups prior to the nitrilation in the step b).

4. The method of claim 2 or 3, wherein some of the sulfonic acid groups in one side surface of the perfluorinated sulfonic acid electrolyte membrane are chemically substituted with carboxyl groups, thereby having double-layered structure.

5. The method of claim 1, wherein all of the sulfonic acid groups in the whole perfluorinated sulfonic acid electrolyte membrane are chemically substituted with carboxyl groups.

6. The method of claim 1, wherein the perfluorinated sulfonic acid electrolyte membrane is a perfluorinated sulfuric acid ionomer free-standing membrane or a reinforced composite membrane including porous supports.

7. The method of claim 6, wherein the perfluorinated sulfuric acid ionomer is selected from the group consisting of poly(perfluorosulfonic acid)s, sulfonic acid-containing-copolymers composed of tetrafluoroethylene and fluorovinylether, and their mixtures thereof.

8. The method of claim 6, wherein the porous supports of the reinforced composite membrane are selected from the group consisting of polytetrafluoroethylene, poly(vinyl difluoroethylene), polyethylene, polypropylene, poly(ethylene terephthalate), polyimide and polyamide.

9. The method of claim 1, wherein the chlorination is performed by treating the perfluorinated sulfonic acid electrolyte membrane with a solution including one or more compounds selected from the group consisting of $SOCl_2$, $MeSO_2Cl$, $PCl_5$, $POCl_3$, and dichloromethane (DCM).

10. The method of claim 3, wherein the restoration of sulfonic acid groups is performed by treating the electrolyte membrane with a solution including one or more compounds selected from the group consisting of NaOH, KOH, LiOH, $Be(OH)_2$, and $Ca(OH)_2$.

11. The method of claim 1, wherein the nitrilation is performed by treating the chlorinated electrolyte membrane with a solution including one or more compounds selected from the group consisting of KCN, $CH_3CN$, KOCN, KSCN, NaOCN, AgCN, and CuCN.

12. The method of claim 1, wherein the hydrolysis is performed by treating the nitrilated electrolyte membrane with an aqueous solution or deionized water which contains one or more compounds selected from the group consisting of HCl, $H_2SO_4$, $H_3PO_4$, $HNO_3$, NaOH, KOH, LiOH, $Be(OH)_2$, and $Ca(OH)_2$.

13. An ion-exchange membrane in which sulfonic acid groups are substituted with carboxyl groups according to the

method of preparing an ion-exchange membrane of claim 1.

**14.** An ion-exchange membrane having double-layered structure modified by substituting some sulfonic acid groups in one side surface layer with carboxyl groups according to the method of preparing an ion-exchange membrane of claim 2 or 3.

**Patentansprüche**

**1.** Verfahren zur Herstellung einer Kationenaustauschmembran, das durch selektives Substituieren von Sulfonsäure-Gruppen in einer perfluorierten Sulfonsäure-Elektrolyt-Membran durch Carboxyl-Gruppen gekennzeichnet ist, wobei das Verfahren umfasst:

a) Chlorieren von Sulfonsäure-Gruppen in einer perfluorierten Sulfonsäure-Elektrolyt-Membran;
b) Nitrilieren der chlorierten Elektrolyt-Membran; und
c) Hydrolisieren der nitrilierten Elektrolyt-Membran.

**2.** Verfahren nach Anspruch 1, wobei in Schritt a) einige der Sulfonsäure-Gruppen in der perfluorierten Sulfonsäure-Elektrolyt-Membran chloriert sind.

**3.** Verfahren nach Anspruch 1, das weiter einen zusätzlichen Schritt zum Wiederherstellen einiger der Sulfonsäure-Gruppen vor dem Nitrilieren im Schritt b) umfasst.

**4.** Verfahren nach Anspruch 2 oder 3, wobei einige der Sulfonsäure-Gruppen auf einer Seitenoberfläche der perfluorierten Sulfonsäure-Elektrolyt-Membran chemisch durch Carboxyl-Gruppen substituiert werden, wodurch sie eine doppelschichtige Struktur aufweisen.

**5.** Verfahren nach Anspruch 1, wobei alle der Sulfonsäure-Gruppen in der gesamten perfluorierten Sulfonsäure-Elektrolyt-Membran chemisch durch Carboxyl-Gruppen substituiert werden.

**6.** Verfahren nach Anspruch 1, wobei die perfluorierte Sulfonsäure-Elektrolyt-Membran eine freistehende perfluorierte Schwefelsäure-Ionomer-Membran oder eine verstärkte Verbundmembran ist, die poröse Träger beinhaltet.

**7.** Verfahren nach Anspruch 6, wobei das perfluorierte Schwefelsäure-Ionomer aus der Gruppe ausgewählt ist, bestehend aus Poly(Perfluorsulfonsäure)n, Sulfonsäure enthaltenden Copolymeren bestehend aus Tetrafluorethylen und Fluorvinylether und deren Gemischen davon.

**8.** Verfahren nach Anspruch 6, wobei die porösen Träger der verstärkten Verbundmembran aus der Gruppe ausgewählt sind, bestehend aus Polytetrafluorethylen, Poly(vinyldifluorethylen), Polyethylen, Polypropylen, Poly(ethylenterephthalat), Polyimid und Polyamid.

**9.** Verfahren nach Anspruch 1, wobei das Chlorieren durch Behandeln der perfluorierten Sulfonsäure-Elektrolyt-Membran mit einer Lösung durchgeführt wird, die eine oder mehrere Verbindungen beinhaltet, die aus der Gruppe ausgewählt sind, bestehend aus $SOCl_2$, $MeSO_2Cl$, $PCl_5$, $POCl_3$, und Dichlormethan (DCM).

**10.** Verfahren nach Anspruch 3, wobei die Wiederherstellung der Sulfonsäure-Gruppen durch Behandeln der Elektrolyt-Membran mit einer Lösung durchgeführt wird, die eine oder mehrere Verbindungen beinhaltet, die aus der Gruppe ausgewählt werden, bestehend aus NaOH, KOH, LiOH, $Be(OH)_2$ und $Ca(OH)_2$.

**11.** Verfahren nach Anspruch 1, wobei das Nitrilieren durch Behandeln der chlorierten Elektrolyt-Membran mit einer Lösung durchgeführt wird, die eine oder mehrere Verbindungen beinhaltet, die aus der Gruppe ausgewählt werden, bestehend aus KCN, $CH_3CN$, KOCN, KSCN, NaOCN, AgCN und CuCN.

**12.** Verfahren nach Anspruch 1, wobei die Hydrolyse durch Behandeln der nitrilierten Elektrolyt-Membran mit einer wässrigen Lösung oder entionisiertem Wasser durchgeführt wird, das eine oder mehrere Verbindungen enthält, die aus der Gruppe ausgewählt werden, bestehend aus HCl, $H_2SO_4$, $H_3PO_4$, $HNO_3$, NaOH, KOH, LiOH, $Be(OH)_2$, und $Ca(OH)_2$.

**13.** Ionenaustauschmembran, in der Sulfonsäure-Gruppen entsprechend dem Verfahren zur Herstellung einer Ionenaustauschmembran nach Anspruch 1 durch Carboxyl-Gruppen substituiert werden.

**14.** Ionenaustauschmembran, die eine doppelschichtige Struktur aufweist, die durch Substituieren einiger Sulfonsäure-Gruppen auf einer Seitenoberflächenschicht durch Carboxyl-Gruppen entsprechend dem Verfahren zur Herstellung einer Ionenaustauschmembran nach Anspruch 2 oder 3 modifiziert wird.

## Revendications

**1.** Procédé de préparation d'une membrane échangeuse de cations, qui est **caractérisé par** la substitution sélective de groupes acide sulfonique dans une membrane électrolytique d'acide sulfonique perfluoré par des groupes carboxyle, le procédé comprenant :

a) la chloration de groupes acide sulfonique dans une membrane électrolytique d'acide sulfonique perfluoré;
b) la nitrilation de la membrane électrolytique chlorée ; et
c) l'hydrolyse de la membrane électrolytique nitrilée.

**2.** Procédé selon la revendication 1, dans lequel, à l'étape a), une partie des groupes acide sulfonique dans la membrane électrolytique d'acide sulfonique perfluoré sont chlorés.

**3.** Procédé selon la revendication 1, comprenant en outre une étape supplémentaire de restauration de certains des groupes acide sulfonique avant la nitrilation à l'étape b).

**4.** Procédé selon la revendication 2 ou 3, dans lequel une partie des groupes acide sulfonique dans une surface latérale de la membrane électrolytique d'acide sulfonique perfluoré sont chimiquement substitués par des groupes carboxyle, ayant ainsi une structure à double couche.

**5.** Procédé selon la revendication 1, dans lequel la totalité des groupes acide sulfonique dans la membrane électrolytique d'acide sulfonique perfluoré entière sont chimiquement substitués par des groupes carboxyle.

**6.** Procédé selon la revendication 1, dans lequel la membrane électrolytique d'acide sulfonique perfluoré est une membrane autonome d'ionomère d'acide sulfurique perfluoré ou une membrane composite renforcée incluant des supports poreux.

**7.** Procédé selon la revendication 6, dans lequel l'ionomère d'acide sulfurique perfluoré est sélectionné dans le groupe constitué de poly(acides perfluorosulfoniques), de copolymères contenant un acide sulfonique composés de tétrafluoroéthylène et d'éther fluorovinylique, et de mélanges de ceux-ci.

**8.** Procédé selon la revendication 6, dans lequel les supports poreux de la membrane composite renforcée sont sélectionnés dans le groupe constitué du polytétrafluoroéthylène, du poly(vinyl difluoroéthylène), du polyéthylène, du polypropylène, du poly(téréphtalate d'éthylène), du polyimide et du polyamide.

**9.** Procédé selon la revendication 1, dans lequel la chloration est réalisée par traitement de la membrane électrolytique d'acide sulfonique perfluoré avec une solution incluant un ou plusieurs composés sélectionnés dans le groupe constitué de $SOCl_2$, $MeSO_2Cl$, $PCl_5$, $POCl_3$ et dichlorométhane (DCM).

**10.** Procédé selon la revendication 3, dans lequel la restauration des groupes acide sulfonique est réalisée par traitement de la membrane électrolytique avec une solution incluant un ou plusieurs composés sélectionnés dans le groupe constitué de NaOH, KOH, LiOH, $Be(OH)_2$ et $Ca(OH)_2$.

**11.** Procédé selon la revendication 1, dans lequel la nitrilation est réalisée par traitement de la membrane électrolytique chlorée avec une solution incluant un ou plusieurs composés sélectionnés dans le groupe constitué de KCN, $CH_3CN$, KOCN, KSCN, NaOCN, AgCN et CuCN.

**12.** Procédé selon la revendication 1, dans lequel l'hydrolyse est réalisée par traitement de la membrane électrolytique nitrilée avec une solution aqueuse ou de l'eau désionisée qui contient un ou plusieurs composés sélectionnés dans le groupe constitué de HCl, $H_2SO_4$, $H_3PO_4$, $HNO_3$, NaOH, KOH, LiOH, $Be(OH)_2$ et $Ca(OH)_2$.

**13.** Membrane échangeuse d'ions dans laquelle les groupes acide sulfonique sont substitués par des groupes carboxyle conformément au procédé de préparation d'une membrane échangeuse d'ions selon la revendication 1.

**14.** Membrane échangeuse d'ions ayant une structure à double couche modifiée par substitution de certains groupes acide sulfonique dans une couche de surface latérale par des groupes carboxyle conformément au procédé de préparation d'une membrane échangeuse d'ions selon la revendication 2 ou 3.

[FIG. 1]

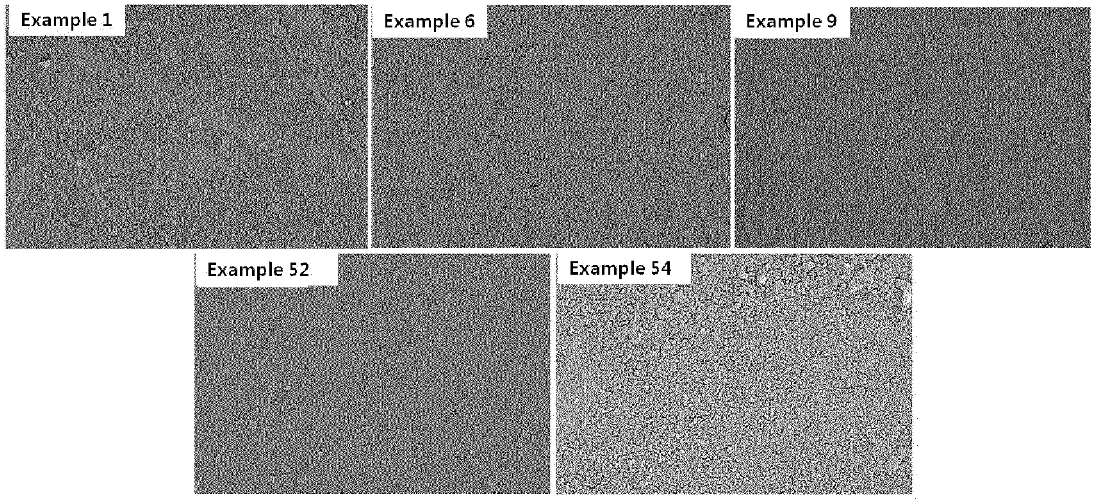
Example 1
Example 6
Example 9
Example 52
Example 54

[FIG. 2]

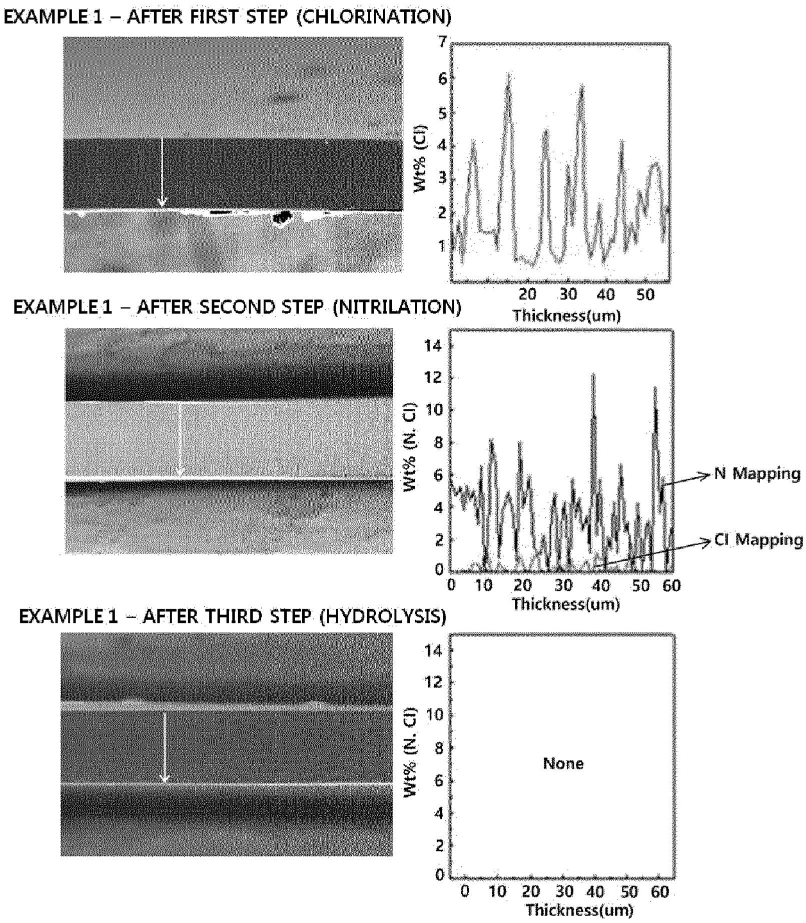
EXAMPLE 1 – AFTER FIRST STEP (CHLORINATION)
Wt% (Cl)
Thickness(um)
EXAMPLE 1 – AFTER SECOND STEP (NITRILATION)
Wt% (N. Cl)
N Mapping
Cl Mapping
Thickness(um)
EXAMPLE 1 – AFTER THIRD STEP (HYDROLYSIS)
Wt% (N. Cl)
None
Thickness(um)

[FIG. 3]

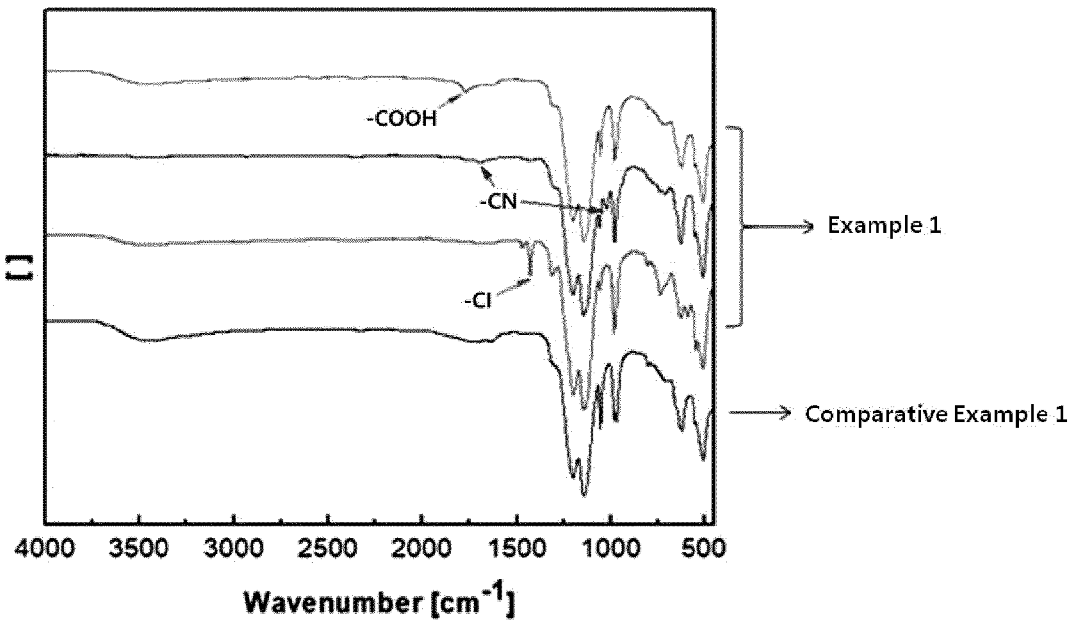
-COOH
-CN
-Cl
Example 1
Comparative Example 1
[-]
4000
3500
3000
2500
2000
1500
1000
500
Wavenumber [cm-1]

[FIG. 4]

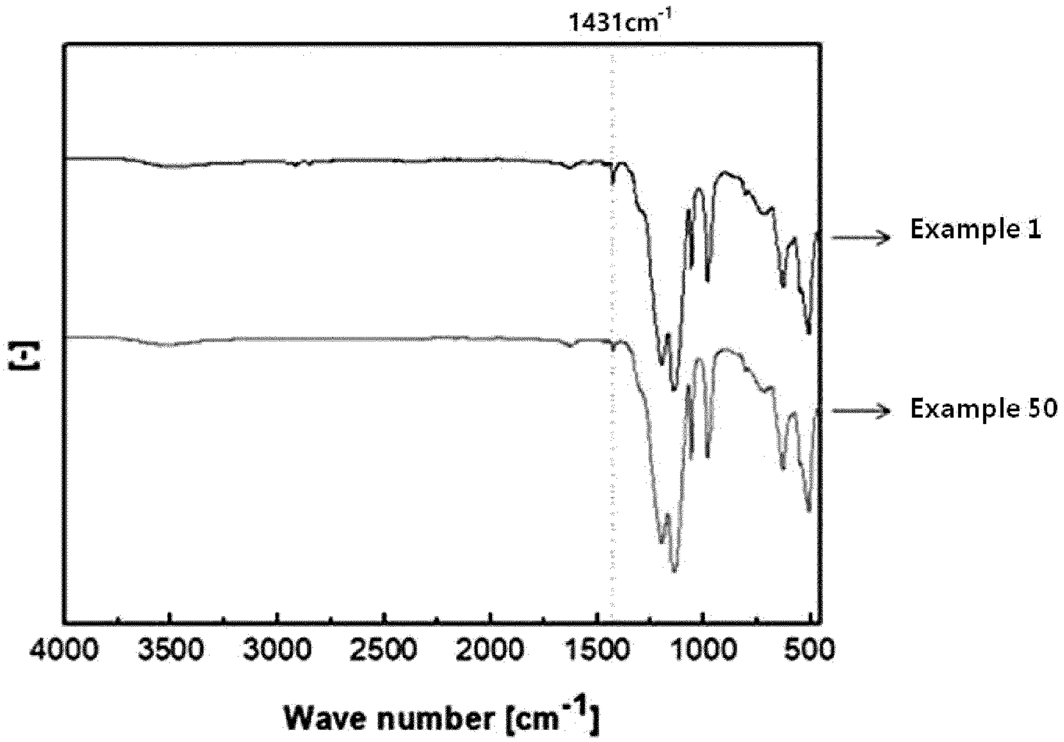
1431cm-1
Example 1
Example 50
[-]
4000
3500
3000
2500
2000
1500
1000
500
Wave number [cm-1]

[FIG. 5]

| Sodium ion ($Na^+$) Conductivity ($S\ cm^{-1}$) | | |
|---|---|---|
| | 30 ℃ | 90 ℃ |
| Example 50 | 0.01087 | 0.04337 |
| Example 51 | 0.01081 | 0.04365 |
| Example 52 | 0.02108 | 0.04884 |
| Example 53 | 0.02114 | 0.04901 |
| Example 54 | 0.01156 | 0.03863 |
| Example 55 | 0.01149 | 0.03874 |
| Comparative Example 4 | 0.00251 | 0.01744 |

[FIG. 6]

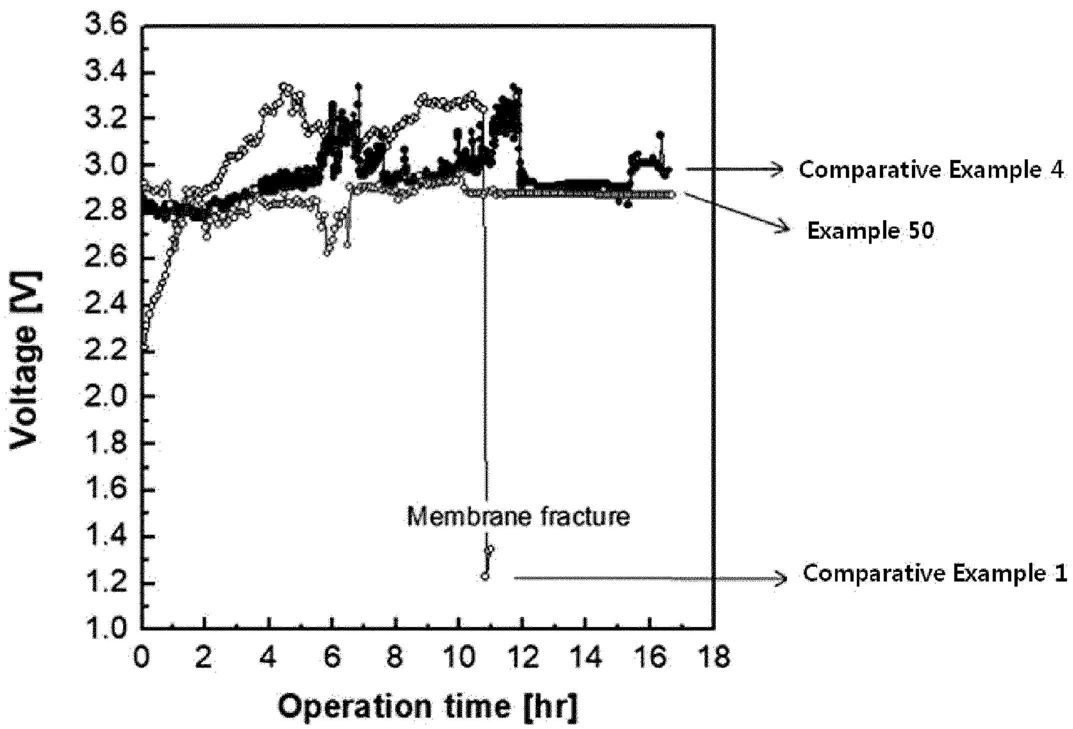

[FIG. 7]

| | Cell voltage at 0,6 A cm$^{-2}$ (V) | Energy consumption at 90 °C (MWh/ton $Cl_2$) | | Cell voltage at 0,6 A cm$^{-2}$ (V) | Energy consumption at 90 °C (MWh/ton $Cl_2$) |
|---|---|---|---|---|---|
| Example 1 | 3,10 | 2,12 | Example 32 | 3,11 | 2,18 |
| Example 2 | 3,17 | 2,17 | Example 33 | 3,10 | 2,17 |
| Example 3 | 3,11 | 2,15 | Example 34 | 3,09 | 2,16 |
| Example 4 | 3,08 | 2,17 | Example 35 | 3,10 | 2,17 |
| Example 5 | 3,12 | 2,18 | Example 36 | 3,10 | 2,18 |
| Example 6 | 3,08 | 2,17 | Example 37 | 3,11 | 2,17 |
| Example 7 | 3,11 | 2,16 | Example 38 | 3,08 | 2,16 |
| Example 8 | 3,13 | 2,17 | Example 39 | 3,12 | 2,18 |
| Example 9 | 3,09 | 2,16 | Example 40 | 3,08 | 2,16 |
| Example 10 | 3,08 | 2,18 | Example 41 | 3,11 | 2,17 |
| Example 11 | 3,08 | 2,18 | Example 42 | 3,13 | 2,18 |
| Example 12 | 3,11 | 2,16 | Example 43 | 3,09 | 2,16 |
| Example 13 | 3,16 | 2,15 | Example 44 | 3,08 | 2,16 |
| Example 14 | 3,15 | 2,16 | Example 45 | 3,08 | 2,16 |
| Example 15 | 3,19 | 2,18 | Example 46 | 3,11 | 2,17 |
| Example 16 | 3,16 | 2,17 | Example 47 | 3,11 | 2,17 |
| Example 17 | 3,17 | 2,14 | Example 48 | 3,08 | 2,16 |
| Example 18 | 3,18 | 2,18 | Example 49 | 3,13 | 2,18 |
| Example 19 | 3,20 | 2,19 | Example 50 | 2,90 | 2,19 |
| Example 20 | 3,11 | 2,19 | Example 51 | 2,91 | 2,07 |
| Example 21 | 3,07 | 2,18 | Example 52 | 2,97 | 2,10 |
| Example 22 | 2,98 | 2,15 | Example 53 | 2,88 | 2,00 |
| Example 23 | 2,99 | 2,16 | Example 54 | 2,85 | 2,05 |
| Example 24 | 3,15 | 2,18 | Example 55 | 2,89 | 2,11 |
| Example 25 | 2,97 | 2,17 | Comparative Example 1 | 3,49 | 2,51 |
| Example 26 | 3,06 | 2,16 | Comparative Example 2 | 3,41 | 2,50 |
| Example 27 | 3,04 | 2,19 | Comparative Example 3 | 3,75 | 2,60 |
| Example 28 | 3,12 | 2,20 | Comparative Example 4 | 3,34 | 2,48 |
| Example 29 | 3,08 | 2,18 | | | |
| Example 30 | 3,04 | 2,21 | | | |
| Example 31 | 3,05 | 2,16 | | | |

[FIG. 8]

| | $OH^-$ ion permeability ($cm^{-2}$ / sec) |
|---|---|
| Example 1 | $6.22 \times 10^{-5}$ |
| Example 50 | $8.63 \times 10^{-5}$ |
| Comparative Example 1 | $3.19 \times 10^{-5}$ |
| Comparative Example 4 | $1.17 \times 10^{-5}$ |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001323084 A
- KR 20170113232